# EUROPÄISCHE PATENTSCHRIFT

(11) **EP 0 713 733 B1**
(45) Veröffentlichungstag und Bekanntmachung des Hinweises auf die Patenterteilung: **29.07.1998**
(21) Anmeldenummer: 95250101.3
(22) Anmeldetag: 28.04.1995
(51) Int. Cl.: B09B 5/00, B03B 9/06, H01J 9/00

(54) **Verfahren und Vorrichtung zum Zerlegen von Lampen**
Method and device for dismantling lamps
Procédé et dispositif pour le démontage de lampes

(30) Priorität: 24.11.1994 DE 4443234
(43) Veröffentlichungstag der Anmeldung: 29.05.1996
(73) Patentinhaber: Werec GmbH Berlin, D-15345 Hohenstein/Strausberg (DE)
(72) Erfinder: Kalisch, Joachim, Dipl.-Ing. (FH), D-10247 Berlin (DE); Lucht, Hartmut, Dr. rer. nat., D-12524 Berlin (DE); Obst, Hans, Dipl.-Ing. (FH), D-10367 Berlin (DE); Reimer, Burkard, Dipl.-Ing., D-12524 Berlin (DE); Schönherr, Manfred, D-12589 Berlin (DE)
(74) Vertreter: Maikowski, Michael, Dipl.-Ing. Dr.

(56) Entgegenhaltungen:
- WO-A-94/05428
- DE-A- 4 219 044
- DE-A- 4 302 008
- DE-C- 4 004 627
- DE-U- 9 404 261
- PATENT ABSTRACTS OF JAPAN vol. 10 no. 306 (E-446) ,17.Oktober 1986 & JP-A-61 121238 (HITACHI LTD.) 9.Juni 1986,

## Beschreibung

Die Erfindung bezieht sich auf ein Verfahren zum Zerlegen von Lampen nach dem Oberbegriff des Anspruchs 1 und auf Vorrichtungen zur Durchführung dieses Verfahrens.

Der Einsatz von Entladungslampen, wie beispielsweise Quecksilberdampf-Hochdrucklampen oder Natriumdampf-Hochdrucklampen, nimmt, um Energie einzusparen, an Bedeutung und Umfang ständig zu.

Hochdrucklampen weisen einen Sockelteil auf, dessen Lampenfuß ein Gestell der Inneneinbauten trägt. Um diese Baugruppe herum ist der gegebenenfalls eine Schicht aus Leuchtstoff oder lichtstreuendem Material tragende Außenkolben angeordnet. Diese Außenkolben können bei unterschiedlichen Lampensorten aus verschiedenen Glassorten bestehen. Auch enthalten Entladunqslampen beispielsweise das umweltrelevante Element Quecksilber. Für ausgebrannte Lampen ist eine umweltverträgliche Entsorgung der umweltrelevanten Bestandteile dringend geboten und unterliegt strengen Verordnungen. Ferner ist es erforderlich, die in der Lampenmasse enthaltenen Wertstoffe in den Stoffkreislauf zurückzuführen.

Die Verwertung, das heißt eine wirtschaftliche Rückgewinnung von Wertstoffen aus der Lampenmasse ausgebrannter Lampen, insbesondere Hochdruckentladungslampen und die umweltverträgliche Entsorgung der umweltrelevanten Stoffe setzt ein Zerlegen der Lampen voraus. Bisher werden solche Lampen im wesentlichen entsorgt, das heißt geschreddert und komplett auf Sondermülldeponien abgelagert oder wegen der relativ hohen Kosten in geringem Umfang manuell zerlegt und verwertet. Zum Schutz der Umwelt und schonendem Umgang mit den Ressourcen sind durch Gesetz Verwertung anstelle Entsorgung geboten. Der dadurch zu erwartende erhebliche Anstieg der Anzahl zu verwertender Lampen, die dann zerlegt werden müssen, erfordert ein sicheres und wirtschaftlich arbeitendes automatisches Zerlegeverfahren.

Aus der DE 42 19 044 A1 ist ein Verfahren zur Rückgewinnung der Einsatzmaterialien von kompakten Niederdrucklampen bekannt, wobei zuerst der Außenkolben vom Sockel getrennt wird und dann die Lampe weiter zerlegt wird. Der Rohrglasbruch, Bleiglasbruch, Leuchtstoff, Kunststoff, das verunreinigte Glas der Rohrverbindungstücke werden getrennt erfaßt zerkleinert aufbereitet und sortenrein abgelegt.

Der Nachteil dieses Verfahrens besteht aber darin, daß eine automatische Erfassung unterschiedlicher Werkstoffe und insbesondere der Glassorte nicht möglich ist.

Der Erfindung liegt die Aufgabe zugrunde, ein automatisches Verfahren zum Zerlegen von Lampen für deren Wertstoff-Recycling und zur umweltverträglichen Entsorgung der umweltrelevanten Stoffe zur Verfügung zu stellen.

Erfindungsgemäß wird diese Aufgabe durch die technische Lehre des Inhalts des Anspruchs 1 gelöst.

Bei einem Verfahren zum Zerlegen von Lampen, insbesondere Hochdruckentladungslampen in die Komponenten Außenkolbenglas, Inneneinbauten und Sockelteil, für deren Wertstoff-Recycling und zur umweltverträglichen Entsorgung der umweltrelavanten Stoffe, wobei jede Lampe zunächst einer Fördereinrichtung zugeführt wird und in dieser hintereinander angeordneten Arbeitsstationen zugestellt wird, wird für jede Lampe in einem ersten Schritt nach Zuführung zur Fördereinrichtung in einer ersten Arbeitsstation eine Glassortenerkennung des Außenkolbenglases durchgeführt. Anschließend wird der Außenkolben an glassortenspezifischen Abtrennstationen vom Sockel getrennt und zerkleinert. Das Abtrennen und Zerkleinern bei Lampen mit nicht identifizierter Glassorte oder mit Glassorten, die nicht separiert werden sollen, wird an einer gesonderten Abtrennstation vorgenommen. Nach Zerschlagen des Lampenfußes wird das dann freiliegende Gestell durch Zerschneiden der Stromzuführungsdrähte vom Sockelteil abgetrennt.

Die erfindungsgemäße Aufgabe kann auch dadurch gelöst werden, daß die Lampen nach der Glassortenerkennung des Außenkolbenglases in einer Reihenfolge zerlegt werden, die im wesentlichen umgekehrt der Reihenfolge bei der Zusammensetzung im Herstellungsprozeß entspricht, wobei der Außenkolben an glassortenspezifischen Abtrennstationen vom Sockel getrennt und zerkleinert wird, während das Abtrennen und Zerkleinern bei Lampen mit nicht identifizierter Glassorte oder bei Glassorten, die nicht separiert werden sollen, an einer gesonderten Abtrennstation vorgenommen wird.

Die vorgesehene automatische Zustellung der zu zerlegenden Lampen erfolgt mittels einer umlaufenden Fördereinrichtung, der die Lampen zugeführt werden. Bei der großen Typenvielfalt der zu verarbeitenden Lampen, deren ellipsoid- oder röhrenförmige Außenkolben sich in weiten Bereichen bezüglich der Außenkolbendurchmesser und Außenkolbenlängen voneinander unterscheiden, werden die Lampen am Sockel eingespannt. Durch diesen Verfahrensschritt kann das erfindungsgemäße Verfahren in einfachster Weise an die unterschiedlichsten zu verarbeitenden Lampentypen angepaßt werden.

Mit besonderem Vorteil wird erfindungsgemäß jede Lampe in einer Lampenaufnahme in einer umlaufenden Fördereinrichtung in orientierter Stellung am Sockelteil erfaßt und festgespannt. Zur Zeit werden für Hochdruckentladungslampen Sockel E 27 und E 40 mit im wesentlichen zwei unterschiedlichen Durchmessern (27 mm und 40 mm) verwendet. Diese am Sockel erfolgende, vorzugsweise hängende Einspannung der Lampen in den Lampenaufnahmen der Fördereinrichtungen ist optimal, da bei einem Typenwechsel das Verfahren identisch ohne Änderung durchgeführt werden kann. Es ist lediglich eine Aufnahme für beide Sockelgrößen erforderlich, wobei gegebenenfalls der Einspannmechanismus umgestellt werden muß.

In zumindest einer Abtrennstation wird der Außenkolben der Lampen durch einen Schlag auf eine Stelle hoher Spannung im Glas und/oder geringer Materialstärke, insbesondere am Sockelrand abgetrennt. Eine derartige Abtrennung in der Abtrennstation hat zur Folge, daß ein weitgehend glattes Abringeln des Außenkolbens am Sockel eintritt. Am Sockel bleiben fast keine Außenkolbenglasteile zurück. Der abgetrennte Glasaußenkolben wird in dieser Station vorzerkleinert.

Es ist auch möglich, den Außenkolben mittels Hitze, zum Beispiel durch einen erhitzten Draht, eine erhitzte Manschette, durch eine Flamme bzw. einen Flammenkranz oder durch eine rotierende Trennscheibe vom Sockel zu trennen.

Bei einer anderen Ausführungsform des erfindungsgemäßen Verfahrens wird der Außenkolben vor der Abtrennung belüftet.

Der in der Lampenaufnahme der Fördereinrichtung verbleibende Bestandteil der Lampe wird anschließend Arbeitsstationen zugeführt, in denen die übrigen Lampenteile vom Sockel getrennt werden. Durch das erfindungsgemäße Verfahren wird eine optimale Abtrennung der übrigen Lampenteile ermöglicht.

Da die Lampen in der Lampenaufnahme so mit dem Sockel eingespannt werden, daß der Bodenkontakt stets in der gleichen Niveaulage fixiert ist, liegt bei unterschiedlichen Lampenkonstruktionen der freie Zugang zum Draht der Stromzuführung bzw. des Gestells unterhalb der Quetschung des Lampenfußes in unterschiedlichen Niveauhöhen. Wollte man die Abtrennung an dieser Stelle durchführen, müßte die Schneid- oder Trennvorrichtung mittels einer aufwendigen Abtast- und Steuertechnik vor jedem Schnitt auf die Höhenlage des freiliegenden Gestelldrahtes gebracht werden, was zu einem erheblichen zusätzlichen technischen Aufwand und zu einer Verlängerung der Arbeitszeit führen würde.

Wegen der erfindungsgemäß vorgenommenen Einspannung des Sockels besteht nun die Möglichkeit, den Sockelrand als Orientierungspunkt für den Schnitt zu verwenden. In vorteilhafter Weise wird lediglich der Lampenfuß zerschlagen, zerbrochen oder zerdrückt, so daß die dadurch freigelegten Stromzuführungen zerschnitten werden können. Nach der Trennung von Gestell und Sockelteil ist es nur noch erforderlich, den Brenner vom Gestell abzutrennen und umweltverträglich zu entsorgen.

Mit besonderem Vorteil wird von einer zentralen, programmierbaren elektronischen Steuereinheit die Zerlegung der Lampen in den Arbeitsstationen und die Zustellung der Lampen zu diesen gesteuert. Diese Steuerung ermöglicht eine Optimierung der Leistung des Verfahrens. Wenn die Fördereinrichtung kontinuierlich ihre Bahn durchläuft, werden über diese Steuereinheit die Arbeitsstationen synchron mit der Fördereinrichtung mitbewegt und zyklisch zurückgestellt.

Zur Zustellung der Lampen zu den Arbeitsstationen kann die Fördereinrichtung wie auch die Puffereinrichtung in steuerbarer Weise schrittgeschaltet durch zentrale elektrisch- elektronische Steuerungen oder durch mechanische Kurven-, Klinkenantriebs- oder Malterserkreuzsteurungen erfolgen.

Bei einer Ausführungsform des Verfahrens wird der Brenner, der entsorgt werden muß, bereits vor der Abtrennung des Gestells vom Sockel aus dem Gestell herausgetrennt und einer umweltverträglichen Entsorgung zugeführt. Das Heraustrennen des Brenners kann aber auch nach der Abtrennung des Gestells vom Sockel erfolgen.

Mit Vorteil werden die Lampen mit dem Außenkolben nach unten hängend eingespannt, wobei die Lampen, deren Bodenkontakte der Sockel in der gleichen Niveauhöhe in abgeschirmten Lampenaufnahmen einer in einer horizontalen Ebene umlaufenden Fördereinrichtung angeordnet sind.

Um bei der Verarbeitung von Lampen, die unterschiedliche Glassorten aufweisen, dennoch kein Mischglas, sondern sortenreines Glas als Wertstoff zu erhalten, wird mit besonderem Vorteil in einer Arbeitsstation eine Glassortenerkennung durchgeführt. Die Lampe wird anschließend der Abtrennstation zugestellt, die für die jeweilige Glassorte vorgesehen ist.

Zur Durchführung der Glassortenerkennung kann insbesondere ein Verfahren zur Bestimmung der Materialeigenschaften von Werkstoffen unter Verwendung eines gepulsten, auf die Oberfläche fokussierten Laserstrahls verwendet werden. Der Laserstrahl erzeugt in zeitlichen Abständen ein Plasma, das eine für die in diesem Plasma enthaltenen Elemente oder Moleküle charakteristische Strahlung erzeugt, wobei diese Strahlung in Form von Spektrallinien oder Molekülbändern von einer Detektoreinheit erfaßt und ausgewertet wird. Ein derartiges Verfahren wird beispielsweise in der DE 40 04 627 A1 zur analytischen Bestimmung eines Gummibandes beschrieben.

Ein Laserstrahl wird auf das Gummiband fokussiert. Dabei werden an der Oberfläche Bestandteile des Bandes verdampft und zu einem Plasma angeregt. Die im Plasma angeregten Atome senden Licht aus, die mit einem Spektrographen als Spektrallinien gemessen und für eine quantitative Analyse der Bestandteile ausgewertet werden.

Bei der Messung wird das Gummiband mit Argon überströmt, so daß sich das Plasma unter Argonatmosphäre ausbilden kann. Ohne dieses Schutzgas würde ein breiter Untergrund eine quantitative Analyse unmöglich machen. Bei der automatischen Messung von Lampen ist die Aufrechterhaltung einer Schutzgasatmosphäre technisch kompliziert und kostspielig.

Zur Vermeidung dieses Nachteils werden erfindungsgemäß Strahlungsimpulse auf die Glaskolben fokussiert und Glasbestandteile verdampft und in einem Luftplasma angeregt. Zeitlich verzögert zu den Laserimpulsen werden die Spektrallinien der angeregten Atome im Plasma vermessen und aus der Stärke der Spektrallinien der Glasbestandteile wird auf die Glaszusammensetzung geschlossen. Durch die Zeitverzögerung ist die Strahlung des Untergrundes weitgehend abgeklungen, während die Lebensdauer der Strahlung der zu messenden Elemente größer ist und somit getrennt vom Untergrund gemessen werden kann. Die Flächen ausgesuchter kräftiger Linien der untersuchten Elemente werden zur Fläche einer kräftigen Spektrallinie des dominierenden Materials in Beziehung gesetzt. Im vorliegenden Fall ist Silizium das dominierende Material. Das System wird mit Proben unterschiedlicher Zusammensetzung eingeeicht.

Bewertungskriterium für die Eingruppierung der Glaskolben in Klassen sind die gemessenen Konzentrationen von Blei, Bor, Aluminium und Barium. Zum Beispiel erfolgt eine Eingruppierung als Bleiglas bei einem Pb-Gehalt größer 5%, als Borosilikatglas bei einem B-Gehalt größer 10%, als Alumoborosilikatglas bei einem Al-Gehalt größer 10%, als Ba-haltiges Weichglas bei Ba-Gehalt größer 2% und als Natronkalksilikatglas bei einem Ba- und B-Gehalt kleiner 2%.

Die verzögerte Messung des Spektrums erfolgt über eine voreingestellte Integrationszeit.

Die Auswertung erfolgt über einen Rechner, der über eine Schnittstelle die Anlage steuert. An den für die jeweilige Glassorte angeordneten Abtrennstationen werden nach der Glasanalyse und der Glasklassifikation die Glaskolben entsprechend der jeweiligen Bewertung abgetrennt.

Da die Notwendigkeit besteht, Lampen zu zerlegen, deren Glassorten nicht vom Erkennungsprogramm erfaßt werden, bzw. deren Glassorten nicht separiert werden sollen, werden die Außenkolben dieser Lampen in einer, den glassortenspezifischen Abtrennstationen vor-, zwischen- oder nachgeordneten Abtrennstation abgetrennt, so daß die Sortenreinheit in den anderen Abtrennstationen erhalten bleibt.

Mit besonderem Vorteil werden die Werkzeuge und/oder Geräte in den Arbeitsstationen jeweils während des Ruhetaktes der schrittgeschalteten Fördereinrichtung in die Arbeitsposition gebracht. Dies ermöglicht einen vorteilhaften Aufbau einer Anlage zur Durchführung des Verfahrens.

Die Durchführung des Verfahrens wird insbesondere noch dadurch vereinfacht, daß man den abgetrennten Außenkolben jeweils in einen unter jeder Abtrennstation angeordneten Brecher oder ein Mahlwerk fallenläßt, in dem der Außenkolben zur Volumenreduzierung zerbrochen wird, wobei hier die Leuchtstoff- oder lichtstreuende Schicht bereits teilweise entfernt wird.

Die Abtrennstationen und die Brecher werden von Luft durchströmt, wodurch Staub, wie Leuchtstoffe oder lichtstreuender Belag, sowie umweltrelavante Stoffe abgesaugt werden. Durch Filtern werden diese anschließend aus der Luft entfernt.

Um die Leistung des Verfahrens zu optimieren, werden die Lampen zunächst in Lampenaufnahmen eines der Fördereinrichtung vorgeschalteten, mit dieser synchron angetriebenen, umlaufenden Pufferförderers eingesetzt. Zwischen Pufferförderer und Fördereinrichtung ist ein Übersetzer angeordnet, der die Lampen in die Lampenaufnahmen der Fördereinrichtung einsetzt.

Statt eines zusätzlichen Pufferförderers kann der Puffer derart integriert werden, daß der umlaufende Förderer als geradlinig verlaufende, endlose Förderkette oder endloses Förderband mit zwei Umlenkstellen und zwei Trummen, einem vorlaufenden und einem rücklaufenden, oder als Karussell mit einer größeren Zahl von Lampenaufnahmen ausgebildet ist. Die Arbeitsstationen können am vorlaufenden Trumm angeordnet werden, so daß der rücklaufende Trumm mit seinen Lampenaufnahmen als Puffer zur Verfügung steht.

Durch diesen Verfahrensschritt kann immer ein gewisser Puffervorrat an Lampen zur Verfügung gestellt werden. Das Bedienungspersonal kann sich zwischen der Füllung des Pufferförderers und der nächsten Nachfüllung anderen wichtigen Aufgaben widmen.

Die Sockel der Lampen werden in den Lampenaufnahmen des Pufferförderers in einer Sockelzange, in einer im Höhenniveau ausgerichteten Sockellage hängend, eingespannt. Die Längsachsenlage der Lampen wird durch eine auf die Lampenkuppe ausgeübte elastische Kraft auf eine vorgegebene Niveauhöhe eingeregelt.

Bei einer Vorrichtung zur Durchführung des Verfahrens ist eine an Arbeitsstationen vorbeiführende, als endlos umlaufender Förderer oder Drehtisch oder Karussel ausgebildete Fördereinrichtung vorgesehen. In der ersten Arbeitsstation ist weiterhin eine Vorrichtung zur Ermittlung der Glaszusammensetzung vorgesehen und dieser Arbeitsstation sind mehrere, der erkannten Glassorte zugeordnete Abtrennstationen des Außenkolbens vom Sockel sowie eine Abtrennstation für nicht erkannte Glassorten bzw. für Glassorten, die nicht separiert werden sollen, nachgeordnet.

Die Bahn des endlos umlaufenden Förderers kann einen polygonalen oder kreisförmigen Grundriß aufweisen, oder als ein Endlosband oder eine Endloskette mit zwei zueinander parallelen Fördertrummen ausgebildet sein. An diesen Endlosförderern sind in Förderrichtung im Abstand voneinander die Lampenaufnahmen angeordnet.

In der Ausführungsform als Karussell oder Drehtisch sind Lampenaufnahmen an deren Umfang angeordnet.

Von den in der Förderbahn vorgesehenen Arbeitsstationen ist zumindest eine als Außenkolbenabtrennstation mit Schlagwerkzeugen und eine weitere ist als mit Schneidwerkzeugen ausgestattete Gestellabtrennstation ausgebildet.

Die umlaufende Fördervorrichtung verläuft vorzugsweise in einer horizontalen Ebene.

Die Abtrennstation für die Lampenkolben der Lampen, deren Glassorten nicht vom vorgegebenen Erkennungsprogramm erfaßt werden bzw. nicht separiert werden sollen, kann vor, zwischen oder nach den glassortenspezifischen Abtrennstationen angeordnet sein.

Der Fördereinrichtung ist ein vorzugsweise synchron mit dieser angetriebener, umlaufender Pufferförderer (18) zugeordnet, wobei zwischen Pufferförderer (18) und Fördereinrichtung (7) ein Übersetzer vorgesehen ist.

Der Pufferförderer weist ein endlos umlaufendes Förderband oder eine endlos umlaufende Förderkette mit zwei zueinander parallelen Fördertrummen auf oder ist als Karussell ausgebildet. Die Lampenaufnahmen des Pufferförderers weisen eine Sockelzange und eine in senkrechter Richtung federnd gelagerte Kelle auf, die an der Lampenkuppe der eingesetzten Lampe angreift.

Mit besonderem Vorteil weisen die Lampenaufnahmen eine die Lampe auf zumindest drei, vorzugsweise vier Seiten umgebende Abschirmung auf. Durch diese Abschirmung wird beim Zerlegen der Lampen die Glassortenreinheit sichergestellt, da keine Splitter in Arbeitsbereiche gelangen können, die einer anderen Glassorte zugeordnet sind.

Zur Einspannung der Sockel weist die Lampenaufnahme eine elastisch in die Schließstellung vorgespannte Sockelzange auf.

Die Werkzeuge oder Geräte zur Zerlegung der Lampen sind an den Bearbeitungsstationen auf Zustellschlitten gelagert, die zur Lampe hin und von dieser fort bewegbar sind. Diese Ausbildung erleichtert insbesondere erforderliche Umrüstarbeiten.

In jeder Abtrennstation, bei der unter der Förderbahn ein Brecher angeordnet ist, sind mindestens zwei zueiander einstellbare, vorzugsweise zwei miteinander fluchtende, zum Sockelrand hin antreibbare Stößel vorgesehen. Mit besonderem Vorteil weist dabei der Brecher ein in einem Kamm umlaufendes Flügelrad auf. In der Arbeitsstation, in der der Lampenfuß zerschlagen wird, sind mindestens zwei Kurzhubarbeitszylinder einander gegenüberliegend montiert, deren Außenkolbenstangen zum Aufschlagen auf den Lampenfuß bestimmte Hammerbacken tragen.

In der Arbeitsstation, in der die Stromzuführungen abgeschnitten werden, sind zwei Kurzhubzylinder einander gegenüberliegend montiert, deren Außenkolbenstangen Messer zum Abschneiden des Gestells tragen.

In der letzten Arbeitsstation ist ein Stößel zum Auswerfen des Sockels vorgesehen.

Für die Glassortenerkennung ist weiterhin eine Meßanordnung vorgesehen, bei der einem Impulslaser ein teildurchlässiger Spiegel zugeordnet ist, dem einerseits ein zu bestimmender Glaskolben und andererseits ein Spektrograph zugeordnet ist. Der teildurchlässige Spiegel ist vorzugsweise unter einem Winkel von 45° zur optischen Achse des Laserstrahls angeordnet.

Als Impulslaser ist vorzugsweise ein Nd:YAG-Impulslaser mit einer Wellenlänge von 1064 nm und als halbdurchlässiger Spiegel ein dichroitischer Hochleistungslaserspiegel vorgesehen.

Um den Spektrographen getrennt von der übrigen Meßanordnung aufstellen zu können, ist es zweckmäßig, daß zwischen dem Spektrographen und dem halbdurchlässigen Spiegel ein Lichtleiterfaserbündel sowie Linsen für das Fokussieren der aus dem Plasma emittierten Strahlung auf das eine Ende des Lichtleiterfaserbündels vorgesehen sind.

Dem Spektrographen sind eine Detektorkamera und ein Auswertesystem zugeordnet. Weiterhin ist ein Steuerungssystem für die Synchronisierung des Impulslasers, der Detektorkamera und des Auswertesystems vorgesehen.

Mittels dieser Meßanordnung werden Strahlungsimpulse des Implslasers auf einen zu prüfenden Glaskolben fokussiert, Glasbestandteile dadurch verdampft und in einem Luftplasma angeregt. Zeitlich verzögert zu den Laserimpulsen werden die Spektrallinien der angeregten Atome im Plasma vermessen. Aus der Stärke der Spektrallinien der Glasbestandteile wird auf die Glaszusammensetzung geschlossen. Die Auswertung erfolgt über einen Rechner, der über eine Schnittstelle die Anlage steuert. An den für die jeweilige Glassorte angeordneten Abtrennstationen werden nach der Glasanalyse und der Glasklassifikation die Glaskolben entsprechend der jeweiligen Bewertung abgetrennt.

Ausführungsbeispiele der Erfindung sollen unter Bezugnahme auf die Figuren der Zeichnung erläutert werden. Es zeigen:
- Figur 1 -: eine schematische Darstellung der Zerlegung einer Lampe in ihre Komponenten zur Rückgewinnung der Wertstoffe,
- Figur 2 -: eine schematische Darstellung einer Ausführungsform der Vorrichtung zum Zerlegen von Lampen,
- Figur 3 -: eine schematische Darstellung einer Ausführungsform der erfindungsgemäßen Vorrichtung, bei der der Fördereinrichtung ein Pufferförderer vorgeschaltet ist,
- Figur 4 -: eine schematische Darstellung der Anordnung von Lampenaufnahmen an einer Fördereinrichtung,
- Figur 5 -: eine schematische Darstellung, die der Erläuterung einer Abtrennstation dient,
- Figur 6 -: eine schematische Darstellung eines unter einer Abtrennstation angeordneten Brechers,
- Figuren 7 und 8 -: schematische Ansichten der Stationen, in denen der Lampenfuß zerschlagen und die Stromzuführungen zur Abtrennung des Gestells zerschnitten werden,
- Figur 9 -: eine schematische Darstellung der Station, in der vor dem Abtrennen des Gestells der Brenner zur Entsorgung zerschlagen wird
- Figur 10 -: eine schmematische Darstellung eines Auswurfstößels,
- Figur 11 -: eine Vorrichtung zur optischen Glaserkennung.

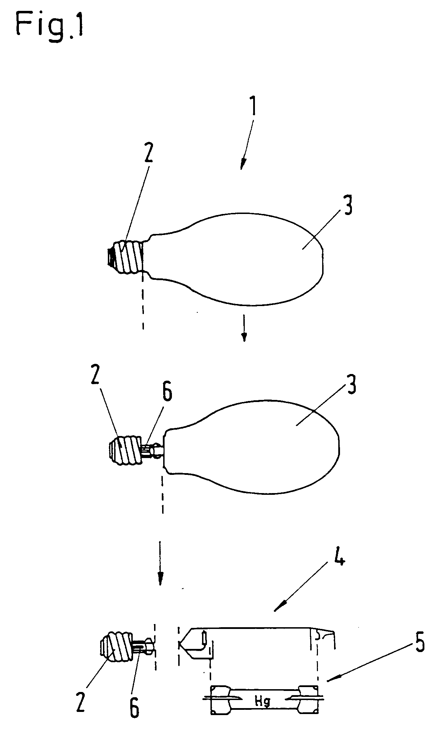

Bei dem Verfahren zum Zerlegen der Lampen wird, wie Figur 1 zeigt, zunächst der aus Glas bestehende Außenkolben 3 vom Sockelteil 2 getrennt. Der Außenkolben wird gebrochen. Das Glas wird zum Beispiel in einem Schwingfließbett von der Beschichtung befreit und der Glasbruch einer Glashütte zugeführt, wobei die Beschichtung zum Beispiel in seltenerdaktivierte Leuchtstoffe und inertes lichtstreuendes Pulver getrennt und verwertet werden.

Bei dem freiliegenden Gestell wird der Lampenfuß 6 zerschlagen und anschließend werden die freigelegten Stromzuführungen zerschnitten.

Vom abgetrennten Gestell wird der Brenner, der umweltrelevante Stoffe enthält, durch Zerbrechen abgetrennt und soweit behandelt, daß das umweltrelevante Quecksilber entfernt, metallische Wertstoffe gegebenenfalls abgetrennt und der ungefährliche Rest anderweitig verwendet werden kann. Das vom Brenner 5 befreite Gestell 4 wird einer Metallaufbereitung zugeführt.

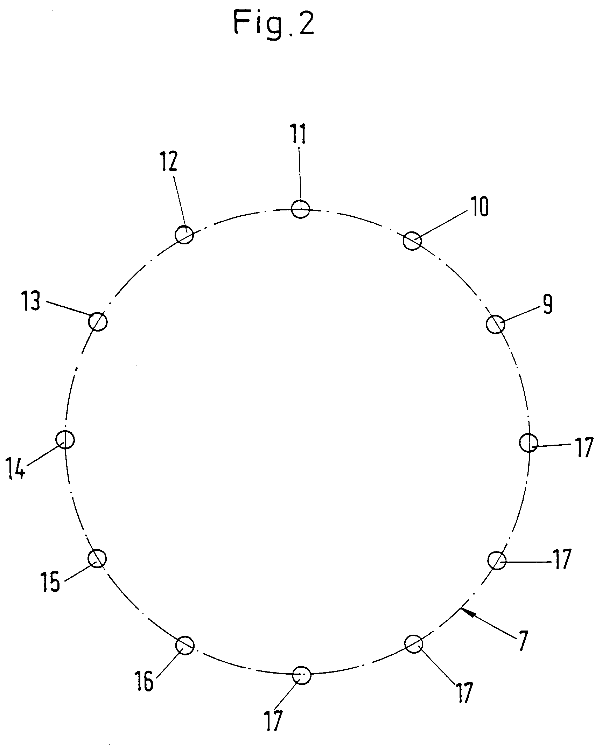

In Figur 2 ist schematisch eine umlaufende Fördereinrichtung 7 dargestellt. Diese Fördereinrichtung 7 kann ein endloser umlaufender Band- oder Kettenförderer sein, dessen Förderbahn einen kreisförmigen Grundriß aufweist. Anstelle des kreisförmigen Grundrisses, der dargestellt ist, könnte 000dieser Grundriß auch polygonal sein.

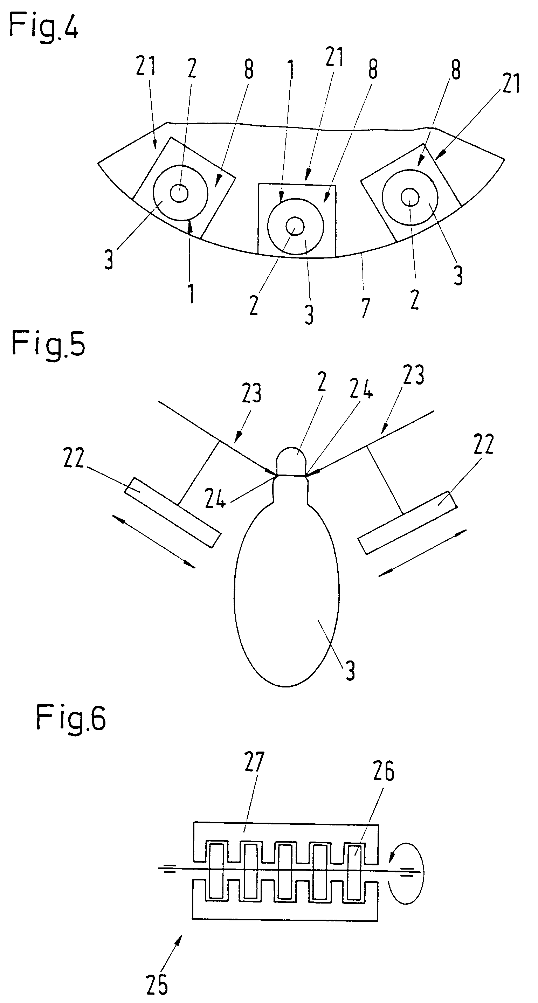

An dieser Fördereinrichtung 7 sind, wie schematisch in Figur 4 gezeigt, Lampenaufnahmen 8 angeordnet. Bei dem in Figur 2 dargestellten Ausführungsbeispiel werden in die in Figur 4 schematisch dargestellten Lampenaufnahmen in den vier dargestellten Lampeneinsetzpositionen 17 Lampen 1, die zerlegt werden sollen, eingesetzt. Die fortlaufend in die Lampeneinsetzpositionen 17 eingesetzten Lampen 1 werden von der Fördereinrichtung 7 Arbeits- oder Bearbeitungsstationen 9 bis 16 zugestellt. Diese Zustellung kann von einer elektronischen, programmierbaren Steuereinheit in gesteuerter Weise kontinuierlich erfolgen. Bei einer kontinuierlichen Zustellung werden die Bearbeitungsstationen zur Durchführung der entsprechenden Bearbeitungsschritte synchron mit der Fördereinrichtung 7 in gesteuerter Weise mitbewegt und nach Durchführung der Arbeit zurückgestellt.

Beim dargestellten Ausführungsbeispiel erfolgt die Zustellung schrittweise, d.h. die Fördereinrichtung 7 wird von einer zentralen Steuereinheit zum Zustellen der Lampen schrittweise geschaltet. Diese zentrale Steuereinheit wird gleichzeitig dazu verwendet, in den Bearbeitungsstationen die Bearbeitungsschritte zu steuern.

Obwohl das erfindungsgemäße Verfahren und die erfindungsgemäßen Vorrichtungen eingesetzt werden können, um Lampen, deren Außenkolben eine einzige Glassorte aufweisen, zu zerlegen, sei die Erfindung anhand eines Ausführungsbeispiels beschrieben, bei dem die zu zerlegenden Lampen Außenkolben unterschiedlicher Glassorten aufweisen. Um sortenreines Bruchglas zu erhalten, werden die zu zerlegenden Lampen speziellen Abtrennstationen 10 bis 13 zugeführt. Beim dargestellten Ausführungsbeispiel werden Lampen, die drei verschiedene Glassorten haben, in den schematisch angedeuteten Abtrennstationen 10, 11 und 12 bearbeitet, wobei jeder Abtrennstation eine spezielle Glassorte zugeordnet ist.

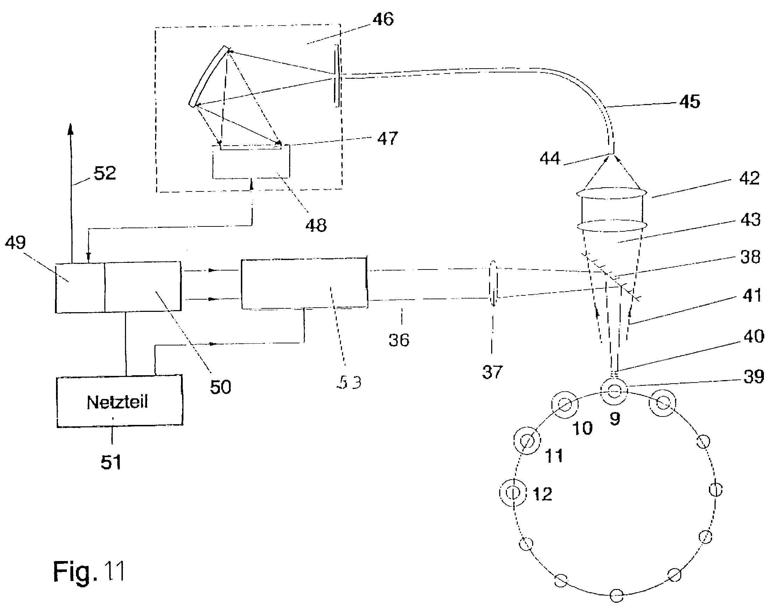

Bei dieser Ausführungsform der Erfindung werden die in den Lampeneinsetzpositionen 17 in die Lampenaufnahmen 20 eingesetzten Lampen zunächst schrittweise einer Glaserkennungsstation 9 zugeführt. In dieser Glaserkennungsstation 9 wird beispielsweise ein optisches Glaserkennungsverfahren angewandt, das mit Hilfe der in Figur 11 dargestellten Meßanordnung realisiert werden kann. Laserstrahlung 36 eines Nd:YAG-Impulslasers 53 mit einer Wellenlänge von 1064 nm wird über eine Fokussieroptik 37 und einen dichroitischen Hochleistungslaserspiegel 38 auf einen Glaskolben 39 in der Glaserkennungsstation 9 gelenkt und ein Plasma 40 erzeugt. Der dichroitische Spiegel 38 besitzt bei einer Stellung von 45° zum einfallenden Laserstrahl und bei einer Wellenlänge von 1064 nm ein hohes Reflexionsvermögen. Die Strahlungsemission 41 aus dem Plasma wird über den Hochleistungslaserspiegel 38 und die Linsen 42 bzw. 43 auf das Ende 44 eines Lichtleitfaserbündels 45 fokussiert. Der Spiegel 38 ist für den ultravioletten und sichtbaren Anteil der Strahlung 41 transparent. Das Lichtleitfaserbündel leitet die Strahlungsemission von dem Probenplasma zum Eintrittsspalt des Spektrographen 46, an dessen Ausgang eine Photodetektorzeile 47 angeordnet ist. Das auf die Zeile abgebildete Spektrum wird durch eine Photodetektor-Kamera 48 abgenommen und die gemessenen Intensitäten einem Auswertesystem 49 übermittelt. Sowohl das Auswertesystem, als auch der Laser 53 und die Photodetektor-Kamera 48 werden durch ein Steuerungssystem 50 synchronisiert. Die Bestimmung der Materialzusammensetzung erfolgt durch Akkumulation mehrerer Einzelmessungen. Zu jeder Einzelmessung erfolgt zunächst durch das Steuerungssystem 50 die Auslösung des Nd:YAG-Lasers 53. Mit definierter Verzögerung wird dann durch das Steuerungssystem die Photodetektorzeilenkamera für eine eingestellte Integrationszeit zur Messung aktiviert. Für die Auswertung und den Dialog enthält das Auswertesystem einen Computer, z. B. einen Industrie-PC. Die Linienflächen werden bestimmt, die Verhältnisse gebildet, aus einer Eichtabelle die quantitativen Angaben ermittelt und die Ergebnisse der Klasse zugeordnet. Über eine serielle Schnittstelle des PC wird die Klasseneinordnung an die Steuerung der Anlage übergeben. Das gesamte System wird durch ein Netzteil 51 versorgt.

Die analytischen Meßergebnisse der einzelnen Glaskolben werden zu einer Klassifizierung in einzelne Glassorten herangezogen. In dem Ausführungsbeispiel erfolgt eine Eingruppierung in drei Klassen, die an den Abtrennstationen 10 bis 12 abgetrennt werden. Bewertungskriterium für die Eingruppierung sind die gemessenen Konzentrationen von Blei, Bor, Aluminium und Barium. Über eine Schnittstelle 52 wird die für den jeweiligen Glaskolben vorgenommene Klassifizierung als digitale Information an die Anlagensteuerung übergeben.

Das beschriebene Verfahren und die Vorrichtung ermöglichen eine zuverlässige quantitative Bestimmung der Materialzusammensetzung ohne Bezugselemente und ohne Benutzung von Inertgasen für die Plasmaatmosphäre, da Spektren zu charakteristischen Zeitpunkten zur Verfügung stehen.

Der Figur 2 ist zu entnehmen, daß noch eine vierte Abtrennstation 13 vorgesehen ist. In dieser Abtrennstation werden diejenigen Glasaußenkolben abgetrennt, deren Glassorte nicht unter das eingegebene Programm fällt.

Die dargestellten vier Abtrennstationen 10 bis 13 weisen den gleichen Aufbau auf. Wie Figur 5 zeigt, werden in den Abtrennstationen 10 bis 13 die am Sockel 2 in den Lampenaufnahmen 8 eingespannten Lampen 1 dadurch zerlegt, daß jeweils mindestens zwei zueinander einstellbare, vorzugsweise zwei miteinander fluchtende Stößel, die bei 23 schematisch dargestellt sind, durch Kurzhubarbeitszylinder 22 derart angetrieben werden, daß sie auf das Glas am Sockelrand 24 schlagen. Die Glaszone am Sockelrand steht, bedingt durch die Fertigungstechnologie der Lampen, unter Spannung und ist besonders dünn. Deshalb wird der Außenkolben 3 als Ganzes durch das Aufschlagen der Stößel 23 abgetrennt. Am Sockelteil 2 bleiben nur geringfügige Splitterteile des Außenkolbens 3 zurück.

Der durch den Schlag der Stößel 23 abgetrennte Außenkolben 3 fällt in den Brecher 25, der schematisch in Figur 6 dargestellt ist und einen Kamm 27 und ein in diesem Kamm rotierendes Flügelrad 26 aufweist.

Wie Figur 4 zeigt, weist die Lampenaufnahme 8 eine die Lampe 1 auf vier Seiten umgebende Abschirmwandung 21, beispielsweise eine Blechwandung, auf. Diese Abschirmwandung 21 verhindert eine Vermengung unterschiedlicher Glassorten, so daß die Sortenreinheit in den einzelnen Abtrennstationen gewährleistet ist.

Die vier schematisch dargestellten Abtrennstationen sind eingehaust und an ein zentrales Absaug/Filtersystem angeschlossen. Durch den durch die Absaugung entstehenden Unterdruck wird das Austreten von Stäuben der Lampenbeschichtung verhindert.

Bei einer anderen Ausführungsform der erfindungsgemäßen Vorrichtung wird die gesamte Anlage eingehaust und an ein Absaug/Filtersystem angeschlossen.

Wenn der Außenkolben 3 von dem Sockelteil 2 abgetrennt ist, hängt an diesem Sockelteil 2 nur noch das Gestell 4 mit dem Brenner 5.

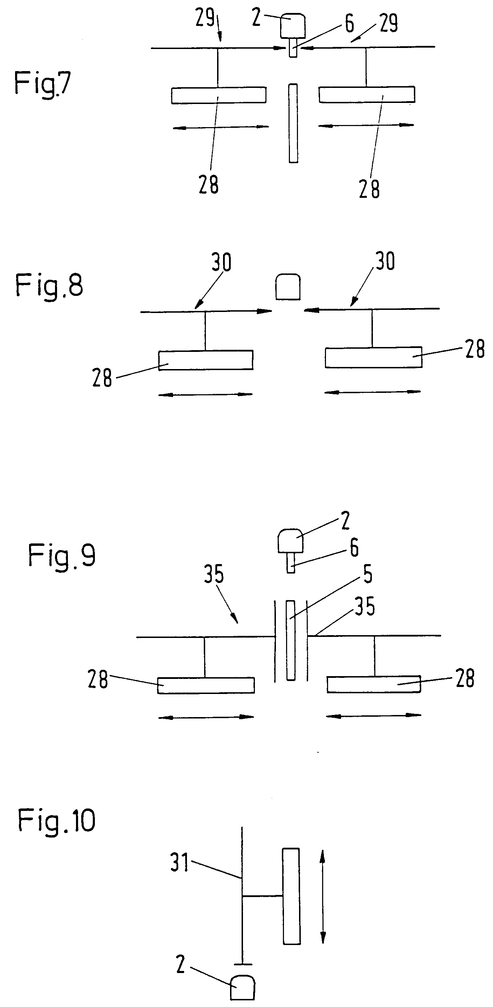

In einer weiteren Arbeitsstation wird das Gestell 4, an dem noch der Brenner 5 befestigt ist, vom Sockel 2 getrennt. Für diese Trennung sind besondere neue und für die Automatisierung vorteilhafte Verfahrensschritte vorgesehen. Bei der in Figur 2 dargestellten Ausführungsform wird in der Arbeitsstation 14 zunächst der Lampenfuß 6 zerschlagen. Zum Zerschlagen dieses Lampenfußes ist in der Arbeitsstation 14, wie Figur 7 schematisch zeigt, ein Zerschlageapparat vorgesehen, der aus zwei Kurzhubarbeitszylindern 28 besteht, die gegenüberliegend montiert sind. Die Kolbenstangen dieser Kurzhubzylinder 28 schlagen mit den an ihren Enden montierten Hammerbacken, die schematisch bei 29 dargestellt sind, auf den Lampenfuß 6 auf. Das Aufschlagen kann mittels der zentralen Steuerung mehrfach wiederholt werden.

Dieser Zerschlageapparat ist auf einem nicht dargestellten Schlitten montiert und wird während des Ruhetaktes der Fördereinrichtung 7 mittels dieses Schlittens in die Arbeits-oder Betriebsstellung gebracht.

Durch das Zerschlagen des Lampenfußes 6 werden die vom Sockel 2 zum Gestell 4 führenden Stromzuführungen für ein Zerschneiden freigelegt.

Das Abschneiden des Gestells 4, d.h. das Trennen des Sockels 2 vom Gestell 4, erfolgt in einer nachgeordneten Arbeitsstation 15, die in ähnlicher Weise wie die in Figur 7 dargestellte Zerschlagestation aufgebaut ist.

Wie Figur 8 zeigt, sind ebenfalls, einander gegenüberliegend montiert, Kurzhubzylinder 28 vorgesehen, die anstelle der Hammerbacken Messer, die schematisch bei 30 gezeigt sind, aufweisen. Das abgeschnittene Gestell kann wegen der Einspannung des Sockels in der Lampenaufnahme 8 senkrecht nach unten fallen. Dieses Gestell, welches noch den Brenner aufweist, kann dann vom Brenner getrennt und einer Metallaufbereitung zugeführt werden.

In der Arbeitsstation 16 wird durch Öffnung von Spannzangen in der Lampenaufnahme der Sockelteil freigegeben, der, falls erforderlich, wie in Figur 10 schematisch veranschaulicht, mittels eines Stößels 31 ausgestoßen werden kann.

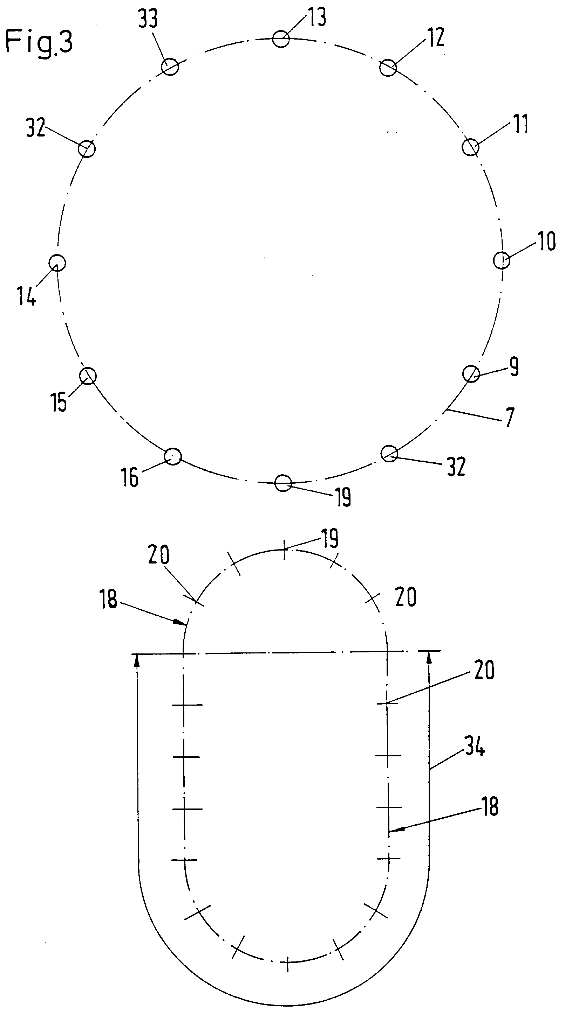

Bei dem in Figur 3 dargestellten Ausführungsbeispiel ist der Fördereinrichtung 7 ein Pufferförderer 18 vorgeschaltet. Dieser Pufferförderer 18 ist als endlos umlaufender Bandförderer ausgebildet, der zwei zueinander parallele Fördertrumme aufweist.

An diesem Bandförderer sind Lampenaufnahmen 20 vorgesehen. Von diesem Pufferförderer 18, der synchron zur Fördereinrichtung 7 angetrieben wird, werden die Lampen einem Übersetzer 19 zugeführt, der schematisch in Figur 3 dargestellt ist. Von diesem Übersetzer 19 werden die Lampen aus den Lampenaufnahmen 20 des Pufferförderers 18 in die Lampenaufnahmen 8 der Fördereinrichtung 7 eingesetzt.

In Figur 3 ist ein Bereich 34 des Pufferförderers 18 besonders gekennzeichnet. In diesem Bereich 34 befinden sich fünfzehn Lampenaufnahmen 20 des Pufferförderers 18. Diese Lampenaufnahmen im Bereich 34 können stets mit Lampen bestückt werden. Die Anordnung dieses Pufferförderers stellt dem Personal einen Pufferzeitraum zur Verfügung, so daß das Verfahren einerseits mit einer höheren Taktfolge arbeiten kann und andererseits die Anlage nur von einer Person bedient werden muß.

Bei dem in Figur 3 schematisch dargestellten Verfahren ist vorgesehen, daß in einer Station 33 der Brenner 5 vor dem Abtrennen des Gestells 4 vom Sockelteil herausgetrennt und entsorgt wird. Wie schematisch Figur 9 zeigt, sind in dieser Station Kurzhubzylinder 28 vorgesehen, deren Außenkolben Backen, die schematisch bei 35 angedeutet sind, tragen und den Brenner 5 zerschlagen.

Ferner sind bei dem in Figur 3 dargestellten Ausführungsbeispiel Reservepositionen 32 vorgesehen, durch die technologische Erweiterungen ermöglicht werden.

## Patentansprüche

1. Verfahren zum Zerlegen von Lampen, insbesondere Hochdruckentladungslampen in die Komponenten Außenkolbenglas, Inneneinbauten und Sockelteil, für deren Wertstoff-Recycling und zur umweltverträglichen Entsorgung der umweltrelavanten Stoffe, wobei jede Lampe zunächst einer Fördereinrichtung **(7)** zugeführt wird und in dieser hintereinander angeordneten Arbeitsstationen zugestellt wird, **wobei zuerst der Außenkolben vom Sockel getrennt wird,**
dadurch gekennzeichnet,
daß für jede Lampe in einem ersten Schritt nach Zuführung zur Fördereinrichtung **(7)** in einer ersten Arbeitsstation **(9)** eine Glassortenerkennung des Außenkolbenglases durchgeführt wird, daß anschließend der Außenkolben an glassortenspezifischen Abtrennstationen **(10 - 12)** vom Sockel getrennt und zerkleinert wird, daß das Abtrennen und Zerkleinern bei Lampen mit nicht identifizierter Glassorte oder mit Glassorten, die nicht separiert werden sollen, an einer gesonderten Abtrennstation **(13)** vorgenommen wird, und daß nach Zerschlagen des Lampenfußes das dann freiliegende Gestell durch Zerschneiden der Stromzuführungsdrähte vom Sockelteil abgetrennt wird,

2. Verfahren zum Zerlegen von Lampen, insbesondere Hochdruckentladungslampen in die Komponenten Außenkolbenglas, Inneneinbauten und Sockelteil, für deren Wertstoff-Recycling und zur umweltverträglichen Entsorgung der umweltrelavanten Stoffe, wobei jede Lampe zunächst einer Fördereinrichtung **(7)** zugeführt wird und in dieser hintereinander angeordneten Arbeitsstationen zugestellt wird, **wobei zuerst der Außenkolben vom Sockel getrennt wird,**
**dadurch gekennzeichnet,**
daß für jede Lampe in einem ersten Schritt nach Zuführung zur Fördereinrichtung **(7)** in einer ersten Arbeitsstation **(9)** eine Glassortenerkennung des Außenkolbenglases durchgeführt wird, daß anschließend die Lampen in einer Reihenfolge zerlegt werden, die umgekehrt der Reihenfolge bei der Zusammensetzung im Herstellungsprozeß entspricht, wobei der Außenkolben an glassortenspezifischen Abtrennstationen **(10 - 12)** vom Sockel getrennt und zerkleinert wird, während das Abtrennen und Zerkleinern bei Lampen mit nicht identifizierter Glassorte oder bei Glassorten, die nicht separiert werden sollen, an einer gesonderten Abtrennstation **(13)** vorgenommen wird.

3. Verfahren nach Anspruch 1 oder 2, **dadurch gekennzeich**net, daß für die Glassortenerkennung Strahlungsimpulse auf die Glaskolben fokussiert und Glasbestandteile verdampft und in einem Luftplasma angeregt werden, daß die Spektrallinien der angeregten Atome zeitlich verzögert zu den Strahlungsimpulsen vermessen werden und daß aus der Stärke der Spektrallinien der Glasbestandteile auf die Glaszusammensetzung geschlossen wird.

4. Verfahren nach mindestens einem der Ansprüche 1 bis 3, **dadurch gekennzeichnet,** daß Bewertungskriterium für die Eingruppierung der Glaskolben in Klassen die gemessenen Konzentrationen von Blei, Bor, Aluminium und Barium ist.

5. Verfahren nach Anspruch 4, **dadurch gekennzeichnet,** daß als Bewertungskriterium für Bleiglas ein Pb-Geahlt größer 5%, für Borosilikatglas ein B-Gehalt größer 5%, für Alumoborosilikatglas ein Al-Gehalt größer 10%, für Ba-haltiges Weichglas ein Ba-Gehalt größer 2% und für Natronkalksilikatglas ein Ba- und B-Gehalt von kleiner als 2% dient.

6. Verfahren nach mindestens einem der vorhergehenden Ansprüche, **dadurch gekennzeichnet,** daß die nach Auslösung des Strahlimpulses verzögerte Messung des Spektrums über eine voreingestellte Integrationszeit erfolgt.

7. Verfahren nach mindestens einem der vorhergehenden Ansprüche, **dadurch gekennzeichnet**, daß die Abtrennung des Außenkolbens (3) der Lampe (1) durch einen Schlag auf eine Stelle hoher Spannung im Glas und/oder geringer Materialstärke, insbesondere am Sockelrand erfolgt.

8. Verfahren nach mindestens einem der vorhergehenden Ansprüche, **dadurch gekennzeichnet,** daß von einer zentralen, programmierbaren elektronischen Steuereinheit die Zerlegung der Lampen (1) in den Arbeitsstationen und die Zustellung der Lampen zu diesen gesteuert wird.

9. Verfahren nach mindestens einem der vorhergehenden Ansprüche, **dadurch gekennzeichnet,** daß die Zustellung der Lampen (1) zu den Arbeitsstationen schrittweise erfolgt.

10. Verfahren nach mindestens einem der vorhergehenden Ansprüche, **dadurch gekennzeichnet,** daß der Brenner (5) entweder vor der Abtrennung des Gestells (4) vom Sockel (2) oder anschließend herausgetrennt und entsorgt wird.

11. Verfahren nach mindestens einem der vorhergehenden Ansprüche, **dadurch gekennzeichnet,** daß das Heraustrennen durch Zerdrücken, Zerbrechen oder Zerschlagen erfolgt.

12. Verfahren nach mindestens einem der vorhergehenden Ansprüche, **dadurch gekennzeichnet,** daß die Lampen (1) mit dem Außenkolben (3) nach unten hängend und mit den Bodenkontakten in der gleichen Niveauhöhe liegend, in einer horizontalen Ebene umlaufenden Fördereinrichtung (7) eingespannt werden.

13. Verfahren nach mindestens einem der vorhergehenden Ansprüche, **dadurch gekennzeichnet,** daß die Außenkolben (3) der Lampen (1), deren Glassorten nicht vom vorgegebenen Erkennungsprogramm erfaßt werden bzw. nicht separiert werden sollen, vor, zwischen oder nach den glassortenspezifischen Abtrennstationen abgetrennt werden.

14. Verfahren nach mindestens einem der vorhergehenden Ansprüche, **dadurch gekennzeichnet,** daß die Werkzeuge und/oder Geräte in den Arbeitsstationen (10 - 13) jeweils im Ruhetakt der schrittgeschalteten Fördereinrichtung (7) in die Arbeitsposition gebracht werden.

15. Verfahren nach mindestens einem der vorhergehenden Ansprüche, **dadurch gekennzeichnet,** daß der abgetrennte Außenkolben (3) in einem unter jeder Abtrennstation (10 - 13) angeordneten Brecher zerbrochen wird, wobei hier die Leuchtstoff- oder lichtstreuende Schicht bereits teilweise entfernt wird.

16. Verfahren nach mindestens einem der vorhergehenden Ansprüche, **dadurch gekennzeichnet,** daß die Abtrennstationen und die Brecher von Luft durchströmt werden, und daß anschließend der dabei abgesaugte Staub, wie Leuchtstoffe oder lichtstreuender Belag, sowie umweltrelevante Stoffe durch Filtern aus der Luft entfernt werden.

17. Verfahren nach mindestens einem der vorhergehenden Ansprüche, **dadurch gekennzeichnet,** daß die Lampen (1) in Lampenaufnahmen (20) eines der Fördereinrichtung (7) vorgeschalteten, mit dieser vorzugsweise synchron angetriebenen, umlaufenden Pufferförderers (18) eingesetzt und mittels eines zwischen Pufferförderer (18) und Fördereinrichtung (7) angeordneten Übersetzers, am Sockel hängend, in die Lampenaufnahmen (8) der Fördereinrichtung (7) eingesetzt werden.

18. Verfahren nach Anspruch 17, **dadurch gekennzeichnet,** daß die Sockel (2) der Lampen (1) in den Lampenaufnahmen (20) des Pufferförderers (18) hängend eingespannt werden und daß die Längsachsenlage der Lampen durch eine auf die Lampenkuppe ausgeübte elastische Kraft auf eine vorgegebene Niveauhöhe eingeregelt wird.

19. Vorrichtung zum Zerlegen von Lampen, insbesondere Hochdruckentladungslampen **in die Komponenten Außenkolbenglas, Inneneinbauten und Sockelteil, für deren Wertstoff-Recycling und zur umweltverträglichen Entsorgung der umweltrelavanten Stoffe, unter Verwendung einer Fördereinrichtrnng (7) und dieser zugeordneten hintereinander angeordneten Arbeitsstationen,** nach mindestens einem der Ansprüche 1 bis 17,
**dadurch gekennzeichnet,**
daß eine an Arbeitsstationen **(9 - 13)** vorbeiführende, als endlos umlaufender Förderer oder Drehtisch oder Karussel ausgebildete Fördereinrichtung **(7)** vorgesehen ist, daß in der ersten Arbeitsstation **(9)** eine Vorrichtung zur Ermittlung der Glaszusammensetzung vorgesehen ist und daß dieser Arbeitsstation mehrere, der erkannten Glassorte zugeordnete Abtrennstationen **(10 - 12)** des Außenkolbens vom Sockel sowie eine Abtrennstation **(13)** für nicht erkannte Glassorten bzw. für Glassorten, die nicht separiert werden sollen, nachgeordnet sind.

20. Vorrichtung nach Anspruch 19, **dadurch gekennzeichnet,** daß sie eine Meßanordnung aufweist, bei der einem Impulslaser **(53)** ein teildurchlässiger Spiegel **(38)** zugeordnet ist und dem einerseits ein zu bestimmender Glaskolben (39) und andererseits ein Spektrograph (46) zugeordnet ist.

21. Vorrichtung nach Anspruch 19 oder 20, **dadurch gekennzeichnet,** daß der teildurchlässige Spiegel **(38)** unter einem Winkel von 45° zur optischen Achse des Laserstrahls angeordnet ist.

22. Vorrichtung nach mindestens einem der Ansprüche 19 bis 21, **dadurch gekennzeichnet,** daß als Impulslaser ein Nd:YAG-Impulslaser (53) mit einer Wellenlänge von 1064 nm vorgesehen ist.

23. Vorrichtung nach mindestens einem der Ansprüche 19 bis 22, **dadurch gekennzeichnet,** daß als halbdurchlässiger Spiegel ein dichroitischer Hochleistungslaserspiegel (38) vorgesehen ist.

24. Vorrichtung nach mindestens einem der Ansprüche 19 bis 23, **dadurch gekennzeichnet,** daß zwischen dem Spektrographen (46) und dem halbdurchlässigen Spiegel ein Lichtleiterfaserbündel (45) sowie Linsen (42, 43) für das Fokussieren der aus dem Plasma emittierten Strahlung auf das eine Ende (44) des Lichtleiterfaserbündels (45) vorgesehen sind.

25. Vorrichtung nach mindestens einem der Ansprüche 19 bis 24, **dadurch gekennzeichnet,** daß dem Spektrographen (46) eine Detektorkamera (48) und ein Auswertesystem (49) zugeordnet sind.

26. Vorrichtung nach mindestens einem der Ansprüche 19 bis 25, **dadurch gekennzeichnet,** daß ein Steuerungssystem (50) für die Synchronisierung des Impulslasers, der Detektorkamera (48) und des Auswertesystems (49) vorgesehen ist.

27. Vorrichtung nach mindestens einem der Ansprüche 19 bis 26, **dadurch gekennzeichnet,** daß in der Fördereinrichtung (7) in Förderrichtung im Abstand voneinander Lampenaufnahmen (8) angeordnet sind, und daß von den in deren Förderbahn vorgesehenen Arbeitsstationen (9 - 16) zumindest eine als Außenkolbenabtrennstation mit Schlagwerkzeugen (Fig. 5) und eine weitere als mit Schneidwerkzeugen (23) ausgestatteten Gestellabtrennstation (Fig. 8) ausgebildet sind.

28. Vorrichtung nach mindestens einem der Ansprüche 19 bis 27, **dadurch gekennzeichnet,** daß eine in einer horizontalen Ebene umlaufende Fördereinrichtung vorgesehen ist.

29. Vorrichtung nach mindestens einem der Ansprüche 19 bis 28**, dadurch gekennzeichnet,** daß die Abtrennstation für die Lampenkolben (3) der Lampen (1), deren Glassorten nicht vom vorgegebenen Erkennungsprogramm erfaßt werden bzw. nicht separiert werden sollen, vor, zwischen oder nach den glassortenspezifischen Abtrennstationen angeordnet ist.

30. Vorrichtung nach mindestens einem der Ansprüche 19 bis 29**, dadurch gekennzeichnet,** daß der Fördereinrichtung (7) ein vorzugsweise synchron mit dieser angetriebener, umlaufender Pufferförderer (18) zugeordnet ist und daß zwischen Pufferförderer (18) und Fördereinrichtung (7) ein Übersetzer vorgesehen ist.

## Claims

1. Method for dismantling lamps, more particularly high pressure fluorescent lamps, into the component parts outside glass casing, internal fittings and socket part, for recycling recoverable materials and for environmentally friendly disposal of environmentally significant materials wherein each lamp is first supplied to a conveyor device (7) and sent by this to a succession of work stations wherein first the outside glass casing is separated from the socket,
characterised in that
for each lamp in a first step after being supplied to the conveyor device (7) a glass type identification of the outside glass casing is carried out in a first work station (9), then the outside glass casing is separated from the socket and pulverised at the specific separating stations (10 - 12) for the relevant glass type, that the separation and pulverisation of lamps having a non-identified glass type or having glass types which are not to be separated is carried out at a separate separating station (13) and that after crushing the lamp base the frame then exposed is separated from the socket part by cutting up the current supply wires.

2. Method for dismantling lamps, more particularly high pressure fluorescent lamps, into the component parts outside glass casing, internal fittings and socket part for recycling the recoverable materials and for environmentally friendly disposal of environmentally significant materials, wherein each lamp is first supplied to a conveyor device (7) and is then delivered in this to a succession of work stations wherein first the outside glass casing is separated from the socket
characterised in that
for each lamp in a first step after being supplied to the conveyor device (7) a glass type identification of the outside glass casing is carried out in a first work station (9), that then the lamps are dismantled in a sequence which corresponds in reverse to the sequence followed when assembling the lamp in the manufacturing process whereby the outside glass casing is separated from the socket and pulverised at the specific separating stations (10-12) for the relevant glass types, whilst separation and pulverisation in the case of lamps having a non-identified glass type or in the case of glass types which are not to be separated is undertaken at a separate separating station (13).

3. Method according to claim 1 or 2 characterised in that for identifying the glass types radiation impulses are focused on the glass casing and the constituent parts making up the glass are vaporised and excited in an air plasma, that the spectral lines of the excited atoms are measured time-delayed relative to the radiation impulses and that the glass composition is concluded from the strength of the spectral lines of the constituent parts of the glass.

4. Method according to at least one of claims 1 to 3 characterised in that the evaluation criteria for grouping the glass casings into classes are the measured concentrations of lead, boron, aluminium and barium.

5. Method according to claim 4 characterised in that the evaluation criteria used for lead glass are a Pb content greater than 5%, for borosilicate glass a B-content greater than 5%, for alumoborosilicate glass an Al-content greater than 10%, for Ba-containing soft glass a Ba-content greater than 2% and for soda lime silicate glass a Ba- and B- content of less than 2%.

6. Method according to at least one of the preceding claims, characterised in that the measurement of the spectrum delayed after the release of the radiation impulse is carried out over a preset integration time.

7. Method according to at least one of the preceding claims, characterised in that the separation of the outer glass casing (3) of the lamp is carried out by striking a point of high tension in the glass and/or of reduced material thickness, more particularly on the socket edge.

8. Method according to at least one of the preceding claims, characterised in that the dismantling of the lamps (1) in the work stations and the supply of the lamps to these work stations is controlled by a central programmable electronic control unit.

9. Method according to at least one of the preceding claims, characterised in that the delivery of the lamps (1) to the work stations is carried out in stages.

10. Method according to at least one of the preceding claims, characterised in that the burner (5) is separated and disposed of either prior to separation of the frame (4) from the socket (2) or afterwards.

11. Method according to at least one of the preceding claims, characterised in that the separation is carried out by crushing, smashing or beating.

12. Method according to at least one of the preceding claims, characterised in that the lamps (1) are clamped in a conveyor device running in a horizontal plane, with the outer glass casing (3) hanging down and with the base contacts lying at the same level.

13. Method according to at least one of the preceding claims, characterised in that the outer glass casings (3) of the lamps (1) whose glass types have not been identified by the preset identification program, or indeed are not to be separated, are separated before, between or after the specific separating stations for the various glass types.

14. Method according to at least one of the preceding claims, characterised in that the tools and/or apparatuses in the work stations (10 - 13) are each brought into the work position during the rest beat of the conveyor device (7) which is switched along by stages.

15. Method according to at least one of the preceding claims, characterised in that the separated outer glass casing (3) is crushed in a breaker mounted under each separation station (10-13) whereby the fluorescent or lamp-scattering layer is already removed here at least in part.

16. Method according to at least one of the preceding claims, characterised in that air flows through the separating stations and breakers and that then the dust, such as the fluorescent substances or lamp-scattering layer, thereby sucked up as well as the environmentally-significant substances are removed from the air through filters.

17. Method according to at least one of the preceding claims, characterised in that the lamps (1) are inserted in lamp holders (20) of a circulating buffer conveyor (18) which is connected in front of the conveyor device (7) and is driven preferably in synchronisation therewith and by means of a transfer member mounted between the buffer conveyor (18) and conveyor device (7), hanging on the socket, are inserted in lamp holders (8) of the conveyor device (7).

18. Method according to claim 17 characterised in that the sockets (2) of the lamps are clamped hanging in the lamp holders (20) of the buffer conveyor (18) and that the longitudinal axial position of the lamps is regulated to a preset level by an elastic force exerted on the lamp tip.

19. Device for dismantling lamps, more particularly high pressure fluorescent lamps, into the components outer glass casing, inner fittings and socket part, for recycling recoverable materials and for environmentally friendly disposal of environmentally significant substances, by using a conveyor device (7) and a succession of work stations associated therewith, according to at least one of claims 1 to 17 characterised in that a conveyor device (7) is provided passing by the work stations (9 - 13) and formed as an endlessly rotating conveyor or turntable or carousel, that in the first work station (9) a device is provided for determining the composition of the glass and that after this work station there are several separating stations (10 - 12) associated with the identified types of glass for separating the outer glass casing from the socket as well as a further separating station (13) for non-identified types of glass or for those types of glass which are not to be separated.

20. Device according to claim 19 characterised in that it has a measuring assembly wherein a partially-permeable mirror (38) is associated with an impulse laser (53) and is associated on one side with an outer glass casing (39) which is to be determined and on the other side with a spectrograph (46).

21. Device according to claim 19 or 20 characterised in that the partially permeable mirror (38) is mounted at an angle of 45 degs. to the optical axis of the laser beam.

22. Device according to at least one of claims 19 to 21 characterised in that an Nd:YAG impulse laser (53) with a wave length of 1064 nm is provided as the impulse laser.

23. Device according to at least one of claims 19 to 22 characterised in that a dichroic high capacity laser mirror (38) is provided as the semi-permeable mirror.

24. Device according to at least one of claims 19 to 23 characterised in that a lamp conductor fibre bundle (45) as well as lenses (42, 43) are provided between the spectrograph (46) and the semi-permeable mirror to focus the beam emitted from the plasma onto the one end (44) of the lamp conductor fibre bundle (45).

25. Device according to at least one of claims 19 to 24 characterised in that a detector camera (48) and evaluator system (49) are associated with the spectrograph (46).

26. Device according to at least one of claims 19 to 25 characterised in that a control system (50) is provided for synchronising the impulse laser, the detector camera (48) and the evaluator system (49).

27. Device according to at least one of claims 19 to 26 characterised in that lamp holders (8) are arranged in the conveyor device (7) spaced out from each other in the conveyor direction and that of the work stations (9 - 16) provided in the conveyor path at least one is formed as an outer glass separating station with beater tools (Figure 5) and a further station is designed as a frame separation station (Figure 8) equipped with cutter tools (23).

28. Device according to at least one of claims 19 to 27 characterised in that a conveyor device is provided rotating in horizontal plane.

29. Device according to at least one of claims 19 to 28 characterised in that the separating station for the outer glass casing (3) of the lamps (1) whose glass types are not identified by the predetermined identification program or indeed are not to be separated, is mounted in front of, between or after the specific separating stations for the relevant types of glass.

30. Device according to at least one of claims 19 to 29 characterised in that the conveyor device (78) is associated with a circulating buffer conveyor (18) preferably driven in synchronisation therewith, and that a transfer member is provided between the buffer conveyor (18) and conveyor device (7).

## Revendications

1. Procédé pour démonter des lampes, notamment des lampes à décharge à haute pression, moyennant leur séparation en les composants comprenant le verre de l'ampoule extérieure, des inserts intérieurs et la partie formant culot, pour leur recyclage et pour éliminer, d'une manière compatible avec l'environnement, des matériaux déterminants pour l'environnement, selon lequel chaque lampe est envoyée tout d'abord à un dispositif de convoyage (7) et, dans ce dernier, est amenée à des postes de travail disposés les uns derrière les autres, l'ampoule extérieure étant tout d'abord séparée du culot,
caractérisé en ce
que pour chaque lampe, lors d'une première étape, après l'envoi de la lampe au dispositif de convoyage (7) l'identification du type de verre de l'ampoule extérieure est exécutée dans un premier poste de travail (9), ensuite l'ampoule extérieure est séparée du culot au niveau de postes de séparation (10-12) qui sont spécifiques aux types de verres, et est fragmentée, que dans le cas de lampes ayant des types de verres non identifiés ou des types de verre qui ne doivent pas être séparés, la séparation et la fragmentation sont exécutées dans un poste de séparation particulier (13), et qu'après la rupture du pied de lampe la monture alors à nu est séparée de la partie formant culot par sectionnement des fils d'alimentation en courant.

2. Procédé pour démonter des lampes, notamment des lampes à décharge à haute pression, moyennant leur séparation en les composants comprenant le verre de l'ampoule extérieure, les inserts intérieurs et la partie formant culot, pour leur recyclage et pour éliminer, d'une manière compatible avec l'environnement, des matériaux déterminants pour l'environnement, selon lequel chaque lampe est envoyée tout d'abord à un dispositif de convoyage (7) et, dans ce dernier, est amenée à des postes de travail disposés les uns derrière les autres, l'ampoule extérieure étant tout d'abord séparée du culot,
caractérisé en ce
que pour chaque lampe, lors d'une première étape, après son envoi au dispositif de convoyage (7) l'identification du type de verre de l'ampoule extérieure est exécutée dans un premier poste de travail (9), qu'ensuite les lampes sont démontées selon une séquence, qui correspond à l'inverse de la séquence utilisée pour l'assemblage lors du procédé de fabrication, l'ampoule extérieure étant séparée du culot au niveau de postes de séparation (10-12) spécifiques aux types de verres, et étant fragmentés, tandis que la séparation et la fragmentation dans le cas de lampes ayant des types de verres non identifiés ou des types de verre qui ne doivent pas être séparés, sont exécutées dans un poste de séparation particulier.

3. Procédé selon la revendication 1 ou 2, caractérisé en ce que pour l'identification du type de verre, les impulsions de rayonnement sont focalisées sur l'ampoule de verre et des constituants du verre sont vaporisés et sont excités dans un plasma d'air, que les raies spectrales des atomes excités sont mesurées d'une manière retardée par rapport aux impulsions de rayonnement et que la composition du verre est déterminée à partir de la largeur des raies spectrales des constituants du verre.

4. Procédé selon au moins l'une des revendications 1 à 3, caractérisé en ce que le critère d'évaluation pour le regroupement des ampoules de verre dans des classes est formé par les concentrations mesurées de plomb, de bore, d'aluminium et de baryum.

5. Procédé selon la revendication 4, caractérisé en ce qu'on utilise comme critère d'évaluation pour du verre au plomb une teneur en Pb supérieure à 5 %, pour du verre au borosilicate une teneur en B supérieure à 5 %, pour du verre à alumino-borosilicate une teneur en Al supérieure à 10 %, pour un verre mou contenant du Ba une teneur en Ba supérieure à 2 % et pour un verre calcaire natron une teneur en Ba et en B inférieure à 2 %.

6. Procédé selon au moins l'une des revendications précédentes, caractérise, en ce que la mesure du spectre, retardée après le déclenchement de l'impulsion de rayonnement, s'effectue pendant une durée d'intégration préréglée.

7. Procédé selon au moins l'une des revendications précédentes, caractérisé en ce que la séparation de l'ampoule extérieure (3) de la lampe (1) est réalisée au moyen d'un choc appliqué en un emplacement sous haute contrainte dans le verre et/ou un emplacement ayant une faible épaisseur de matière, notamment au niveau du bord du culot.

8. Procédé selon au moins l'une des revendications précédentes, caractérisé en ce que le démontage des lampes (1) dans les postes de travail et l'envoi des lampes à ces postes sont commandés par une unité centrale électronique de commande programmable.

9. Procédé selon au moins l'une des revendications précédentes, caractérisé en ce que l'amenée des lampes (1) aux postes de travail s'effectue pas-à-pas.

10. Procédé selon au moins l'une des revendications précédentes, caractérisé en ce que l'unité de décharge (5) est séparée du culot (2) soit avant, soit après la séparation de la monture (4) et est jetée.

11. Procédé selon au moins l'une des revendications précédentes, caractérisé en ce que la séparation s'effectue par écrasement, rupture ou cassure.

12. Procédé selon au moins l'une des revendications précédentes, caractérisé en ce que les lampes (1) sont serrées dans un dispositif de convoyage (7) qui circule dans un plan horizontal, et ce en étant suspendues avec l'ampoule extérieure (3) vers le bas et en ayant leurs contacts de base situés au même niveau en hauteur.

13. Procédé selon au moins l'une des revendications précédentes, caractérisé en ce que les ampoules extérieures (3) des lampes (1), dont les types de verre sont détectés par le programme d'identification prédéterminé ou ne doivent pas être séparés, sont séparées en amont, entre ou en aval des postes de séparation spécifiques aux types de verres.

14. Procédé selon au moins l'une des revendications précédentes, caractérisé en ce que les outils et/ou les appareils situés dans les postes de travail (10-13) sont amenés dans la position de repos en étant respectivement en contact, au repos, avec le dispositif de convoyage (7) qui avance pas-à-pas.

15. Procédé selon au moins l'une des revendications précédentes, caractérisé en ce que l'ampoule extérieure séparée (3) est cassée dans un concasseur disposé au-dessous de chaque poste de séparation (10-13), la couche de substance luminescente ou couche dispersant la lumière étant déjà partiellement retirée.

16. Procédé selon au moins l'une des revendications précédentes, caractérisé en ce que les postes de séparation et les concasseurs sont traversés par de l'air, et ensuite la poussière aspirée, comme par exemple des substances luminescentes ou un revêtement diffusant la lumière, ainsi que des substances déterminantes pour l'environnement sont éliminées de l'air à l'aide de filtres.

17. Procédé selon au moins l'une des revendications précédentes, caractérisé en ce que les lampes (1) sont insérées dans des logements (20) pour lampes d'un convoyeur tampon circulant (18) qui est monté en amont du dispositif de convoyage (7) et est entraîné de préférence en synchronisme avec ce dernier, et sont insérées dans les logements (8) pour lampes du dispositif de convoyage (7), en étant suspendues au niveau du culot, à l'aide d'un dispositif de transfert disposé entre le convoyeur tampon (18) et le dispositif de convoyage (7).

18. Procédé selon la revendication 17, caractérisé en ce que les culots (2) des lampes (1) sont serrés à l'état suspendu dans les logements (20) pour lampes du convoyeur tampon (18) et que la position des axes longitudinaux des lampes est réglée à un niveau en hauteur prédéterminé, au moyen d'une force élastique appliquée à la calotte de la lampe, et réglée à un niveau en hauteur pré-déterminé.

19. Dispositif pour démonter des lampes, notamment des lampes à décharge à haute pression moyennant leur séparation en les composants comprenant le verre de l'ampoule extérieure, des inserts intérieurs et la partie formant culot, pour leur recyclage et pour éliminer, d'une manière compatible avec l'environnement, des substances déterminantes pour l'environnement, moyennant l'utilisation d'un dispositif de convoyage (7) et de postes de travail associés à ce dispositif et disposés les uns derrière les autres, selon au moins l'une des revendications 1 à 17,
caractérisé en ce
qu'il est prévu un dispositif de convoyage (7) qui passe devant des postes de travail (9-13) et est agencé sous la forme d'un convoyeur circulant sans fin ou d'un plateau rotatif ou d'un carrousel, un dispositif servant à déterminer la composition du verre est prévu dans le premier poste de travail (9), et qu'en aval de ce poste de travail sont disposés plusieurs postes de séparation (10-12), qui sont associés aux types de verres identifiés, et servent à séparer l'ampoule de verre du culot, ainsi qu'un poste de séparation (13) pour des types de verres non identifiés ou pour des types de verres, qui ne doivent pas être séparés.

20. Dispositif selon la revendication 19, caractérisé en ce qu'il comporte un dispositif de mesure, dans lequel à un laser à impulsions (53) est associé un miroir partiellement transparent (38), auquel sont associés d'une part une ampoule de verre (39) à déterminer et d'autre part un spectrographe (46).

21. Dispositif selon la revendication 19 ou 20, caractérisé en ce que le miroir partiellement transparent (38) est disposé sous un angle de 45° par rapport à l'axe optique du faisceau laser.

22. Dispositif selon au moins l'une des revendications 19 à 21, caractérisé en ce qu'il est prévu comme laser à impulsions un laser à impulsions Nd:YAG (53) ayant une longueur d'onde de 1064 nm.

23. Dispositif selon au moins l'une des revendications 19 à 22, caractérisé en ce qu'il est prévu comme miroir semi-transparent un miroir dichroïque pour laser de grande puissance (38).

24. Dispositif selon au moins l'une des revendications 19 à 23, caractérisé en ce qu'entre le spectrographe (46) et le miroir semi-transparent sont disposés un faisceau de fibres conductrices ce lumière (45) ainsi que des lentilles (42,43) pour la focalisation du rayonnement émis à partir du plasma, sur une extrémité (44) du faisceau (45) de fibres conductrices de lumière.

25. Dispositif selon au moins l'une des revendications 19 à 24, caractérisé en ce qu'un appareil de détection (48) réalisant des prises de vues et un système d'exploitation (49) sont associés au spectrographe (46).

26. Dispositif selon au moins l'une des revendications 19 à 25, caractérisé en ce qu'il est prévu un système de commande (50) pour la synchronisation du laser à impulsions, de l'appareil de détection (48) réalisant des prises de vues et du système d'exploitation (49).

27. Dispositif selon au moins l'une des revendications 19 à 26, caractérisé en ce que des logements (8) pour les lampes sont disposés à distance les uns des autres, dans la direction de convoyage, dans le dispositif de convoyage (7) et que parmi les postes de travail (9-16), qui sont prévus dans la bande convoyeuse des logements pour les lampes, au moins l'un d'eux est agencé sous la forme d'un poste de séparation de l'ampoule extérieure comportant des outils de frappe (figure 5) et qu'un autre des postes est agencé sous la forme d'un poste de séparation de monture équipé d'outils de coupe (23) (figure 8).

28. Dispositif selon au moins l'une des revendications 19 à 27, caractérisé en ce qu'il est prévu un dispositif de convoyage qui circule dans un plan horizontal.

29. Dispositif selon au moins l'une des revendications 19 à 28, caractérisé en ce que le poste de séparation pour les ampoules (3) des lampes (1), dont les types de verre ne sont pas recensés par le programme d'identification prédéterminé ou ne doivent pas être séparés, est disposé en avant, entre ou en arrière des postes de séparation spécifiques pour les types de verre.

30. Dispositif selon au moins l'une des revendications 19 à 29, caractérisé en ce qu'au système de convoyage (7) est affecté un convoyeur tampon (18) entraîné et se déplaçant de préférence en synchronisation avec celui-ci et en ce qu'entre ce convoyeur tampon (18) et le système de convoyage (7), est prévu un dispositif de transfert.
